# EUROPEAN PATENT SPECIFICATION

(11) **EP 2 452 138 B1**
(45) Date of publication and mention of the grant of the patent: **14.08.2013**
(21) Application number: 10723151.6
(22) Date of filing: 16.06.2010
(51) Int. Cl.: B32B 27/08, B32B 27/30, B32B 27/32, C08L 23/06, F25D 23/06

(54) **A REFRIGERATOR COMPRISING PLASTIC INNER LINER**
KÜHLSCHRANK MIT KUNSTSTOFFAUSKLEIDUNG
RÉFRIGÉRATEUR COMPRENANT UNE CUVE INTERNE EN PLASTIQUE

(30) Priority: 07.07.2009 TR 200905280
(43) Date of publication of application: 16.05.2012
(73) Proprietor: Arçelik Anonim Sirketi, 34950 Istanbul (TR)
(72) Inventor: ERSOY, Osman Gokhan, 34950 Istanbul (TR); ORAL, Mehmet Ali, 34950 Istanbul (TR)
(86) International application number: PCT/EP2010/058471
(87) International publication number: WO 2011/003711

(56) References cited:
- WO-A1-93/13168
- WO-A2-2007/138065
- US-A- 5 717 029
- US-A- 6 164 739

## Description

The present invention relates to a refrigerator wherein the inner liners are produced from plastic material. In producing the refrigerator body inner liners, sheets produced from plastic material, for example from high impact polystyrene (HIPS) material by the extrusion method are used and these sheets are given their final shapes by the thermoforming process.

In the state of the art embodiments polyurethane is injected between the inner liner and the outer wall of the body. Since the blowing agents used during the injection of polyurethane cause chemical degradation, the resistance of the plastic body inner liner surfaces contacting the polyurethane material is increased by reinforcing with materials having high chemical resistance, however the cost of the plastic materials with high chemical resistance is quite high.

In the international patent application no W02007138065, a refrigerator is explained wherein plastic liner sheets are used in the production of the body inner casings and wherein the liner sheets forming the inner casings comprise a main layer produced from HIPS (High Impact Polystyrene) material by extrusion method and a protective layer formed on the surface of the main layer facing the compartment by co-extrusion method, having a high chemical resistance and a gloss that does not decrease below a certain limit.

In the European Patent Application No EP0533388, a plastic liner forming the inner wall of a refrigerator is explained which is resistant to the degradation effects of the blowing agents used during injection of the polyurethane. The plastic liner is produced from High Impact Polystyrene (HIPS) or Acrylonitrile Butadiene Styrene (ABS) material containing from 5 to 35 weight percent rubber.

In the International Patent Application No WO96/20977, a plastic sheet is explained which forms the inner liner of a refrigerator, comprising a barrier layer that is resistant to the degradation actions of blowing agents used during injection of the polyurethane foam. In the production of the barrier layer, modified polyolefin and rubber composition is used.

In the Japanese Patent Application No JP1014583, the plastic sheet used in the production of the heat insulation box of a refrigerator is comprised of high rigidity vinyl chloride layer and an ABS layer wherein a filler material, e.g. calcium carbonate or talc is added.

In the American Patent Application No US2008/0146714, the plastic inner liner of the refrigerator is produced from mineral filled bimodal polyethylene.

Patent specification US-A-5 717 029, which is considered to show the most relevant prior art, discloses a refrigerator comprising an outer wall, a compartment disposed inside its body and wherein food and beverage items are placed, an inner liner enclosing the compartment and produced by thermoforming of plastic material, and an insulation volume disposed between the inner liner and the outer wall and wherein polyurethane is injected, the inner liner being produced from the mixture of:
- high impact polystyrene (HIPS),
- high density polyethylene (HDPE),
- compatibilizer (SIS) material providing mixing of the high impact polystyrene (HIPS) and high density polyethylene (HDPE), and
- filler material (talc).

The aim of the present invention is the realization of a refrigerator having an inner liner produced from plastic material with low cost, high chemical resistance against polyurethane blowing agents and a protective layer on its inner surface facing the compartment which forms a barrier against chemical corroders.

The refrigerator realized in order to attain the aim of the present invention is explicated in the claims.

The refrigerator of the present invention comprises an inner liner forming the interior side of the body, produced by thermoforming of plastic material, having an outer protective layer on the surface facing the compartment, forming a barrier against the chemical degradation resulting from foodstuffs and a main layer under the outer protective layer, situated on the side of the insulation volume. The main layer is produced from the mixture of high impact polystyrene (HIPS), high density polyethylene (HDPE), and the compatibilizer (C) that provides mixing of the high impact polystyrene (HIPS) with high density polyethylene (HDPE) and the filler material (F) (HIPS HDPE, C, F). The outer protective layer of the inner liner facing the compartment is produced from glossy high impact polystyrene and the mixture of "HIPS, HDPE, C".

In an embodiment of the present invention, a material selected from calcium carbonate, talc, dolomite, wollastonite or silica group is used as the filler material (F) in the main layer of the inner liner. The percentage of the filler material (F) in the mixture "HIPS, HDPE, C, F" from which the main layer is produced is between 5 to 60 %, preferably around 30 - 40 %.

In another embodiment of the present invention, in the production of the inner liner, a substance selected from the styrene - isoprene - styrene (SIS), styrene - butadiene - styrene (SBS), polyethylene grafted polystyrene (PE - g - PS) or styrene - ethylene - butadiene - styrene (SEBS) groups is used as the compatibilizer material (C) in order to bind the high impact polystyrene (HIPS) with the high density polyethylene (HDPE).

In another embodiment of the present invention, the inner liner has the main layer in contact with polyurethane on the side of the insulation volume and an inner layer between the main layer and the outer protective layer, produced from the mixture of "HIPS, HDPE, C " or only from HIPS.

In another embodiment of the present invention, the inner liner comprises the inner protective layer in contact with polyurethane on the side of the insulation volume and produced from the mixture of "HIPS, HDPE, C ", the main layer is situated between the inner protective layer and the outer protective layer.

In the production of the inner liner of the refrigerator of the present invention, a material having both a low cost and high chemical and mechanical resistance is obtained by adding filler material (F) to the mixture of high impact polystyrene (HIPS), high density polyethylene (HDPE) and the compatibilizer (C).

The refrigerator realized in order to attain the aim of the present invention is illustrated in the attached figures, where:

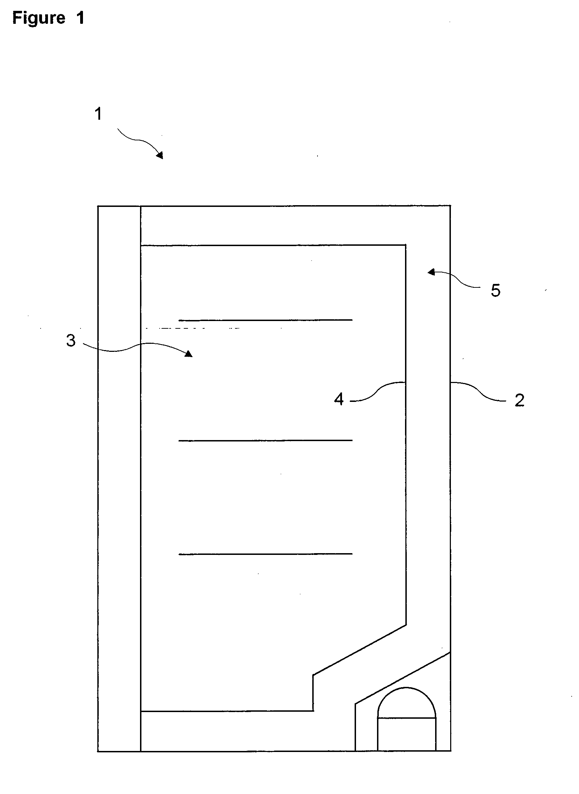

Figure 1 - is the schematic view of a refrigerator.

Figure 2 - is the schematic view of the outer wall, double layer inner liner and the insulation volume between the inner liner and the outer wall disposed in a refrigerator.

Figure 3 - is the schematic view of the outer wall, triple layer inner liner and the insulation volume between the inner liner and the outer wall disposed in a refrigerator.

Figure 4 - is the schematic view of the outer wall, triple layer inner liner and the insulation volume between the inner liner and the outer wall disposed in a refrigerator in another embodiment of the present invention.

The elements illustrated in the figures are numbered as follows:
1. Refrigerator
2. Outer wall
3. Compartment
4. Inner liner
5. Insulation volume
6. Outer protective layer
7. Main layer
8. Inner layer
9. Inner protective layer

The refrigerator (1) comprises an outer wall (2), a compartment (3) disposed inside its body and wherein foods and beverage items are placed, an inner liner (4) enclosing the compartment (3) and produced by thermoforming of plastic material and an insulation volume (5) disposed between the inner liner (4) and the outer wall (2) and wherein polyurethane is injected.

The inner liner (4) has an outer protective layer (6) on its inner surface facing the compartment (3) which forms a barrier against chemical corroders such as oil and residues of detergent used in cleaning and a main layer (7) disposed between the outer protective layer (6) and the insulation volume (5).

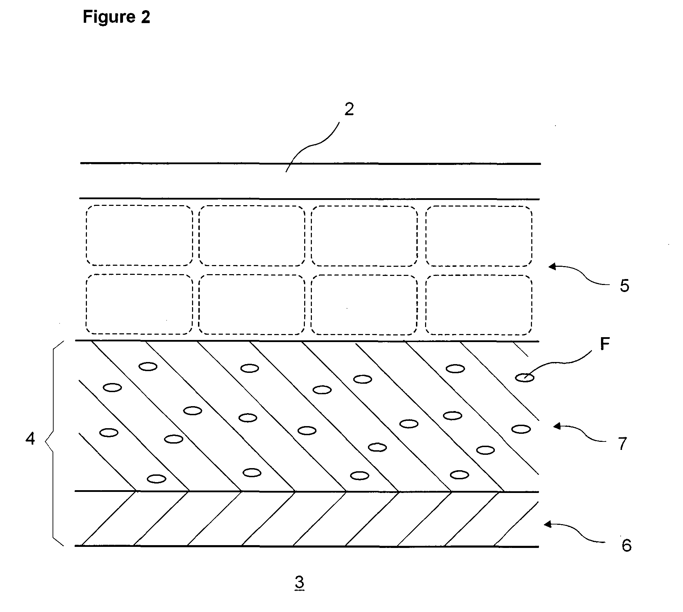

The refrigerator (1) of the present invention comprises the inner liner (4) having the main layer (7) produced from the mixture of
- high impact polystyrene (HIPS),
- high density polyethylene (HDPE),
- compatibilizer (C) material providing mixing of the high impact polystyrene (HIPS) and high density polyethylene (HDPE), [0026] and
- the filler material (F) (Figure 2).

The inner liner (4) is produced by superposing the main layer (7) produced from the said "HIPS, HDPE, C , F" mixture, at first being a flat sheet, with the outer protective layer (6) which is again a flat sheet at first and passing them through the extruder and giving its final shape by the thermoforming method. Afterwards, the inner liner (4) is placed in the outer wall (2) and polyurethane is injected into the insulation volume (5) therebetween. In the injection process, blowing agents such as Freon are used so that the polyurethane fills in the insulation volume (5). In the embodiment of the present invention, the main layer (7) produced from the mixture of "HIPS, HDPE, C, F" provides chemical resistance against the adverse effects of the polyurethane blowing agents by means of the high density polyethylene (HDPE) contained in it. The main layer (7) furthermore maintains the dimensional stability of the inner liner (4) in the cooling phase after thermoforming by means of the high impact polystyrene (HIPS) contained therein, increases the mechanical resistance of the inner liner (4) and on the other hand cost is lowered by means of the filler material (F).

In an embodiment of the present invention, the inner liner (4) has the main layer (7) wherein a material selected from calcium carbonate, talc, dolomite, wollastonite or the silica group is used as the filler material (F).

In the production of the inner liner (4), the rate of the filler material (F) used in the "HIPS, HDPE, C, F" mixture is between 5 to 60 % by weight. In the preferred embodiment, around 30 - 40 % filler material (F) by weight is contained in the "HIPS, HDPE, C, F" mixture.

The high impact polystyrene (HIPS) and high density polyethylene (HDPE) or in general polystyrene (PS) and polyethylene (PE) have different surface tensions. In another embodiment of the present invention, in the production of the inner liner (4) a material selected from the styrene - isoprene - styrene (SIS), styrene - butadiene - styrene (SBS), polyethylene grafted polystyrene (PE - g - PS) or styrene - ethylene - butadiene - styrene (SEBS) groups is used as the compatibilizer material (C) in order to bind the high impact polystyrene (HIPS) with the high density polyethylene (HDPE) which do not have tendency for binding easily.

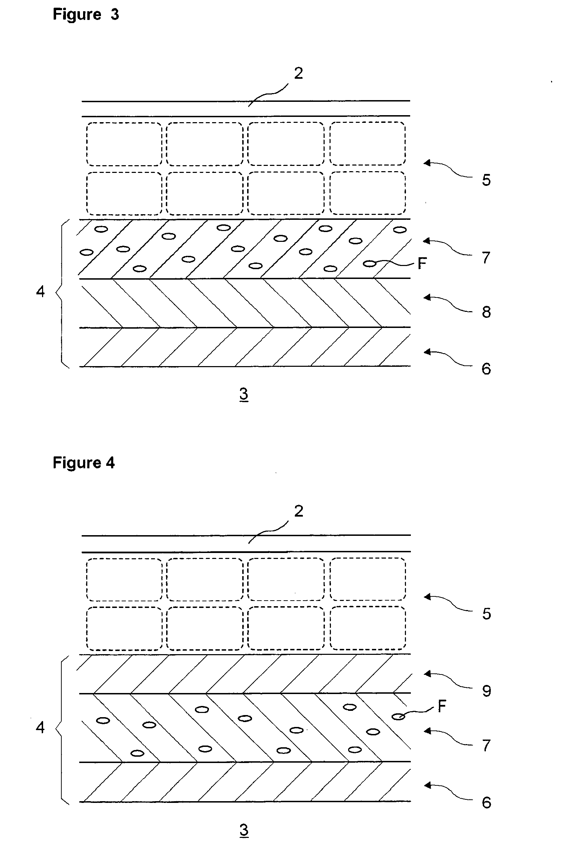

In an embodiment of the present invention, the inner liner (4) has the main layer (7) in contact with polyurethane on the side of the insulation volume (5) and an inner layer (8) situated between the main layer (7) and the outer protective layer (6) and produced only from high impact polystyrene (HIPS) (Figure 3).

In another embodiment of the present invention, the inner liner (4) has the main layer (7) in contact with polyurethane on the side of the insulation volume (5) and an inner layer (8) situated between the main layer (7) and the outer protective layer (6) and produced from the mixture of "HIPS, HDPE, C" (Figure 3).

In another embodiment of the present invention, the inner liner (4) has an inner protective layer (9) in contact with polyurethane on the side of the insulation volume (5), produced from the mixture of "HIPS, HDPE, C" and the main layer (7) situated between the inner protective layer (9) and the outer protective layer (6) (Figure 4).

In the above-mentioned first and second embodiments, in the inner liner (4), an inner layer (8), not containing filler material and produced from only "HIPS" material or from the mixture of "HIPS, HDPE, C", is provided between the main layer (7) produced from the mixture of HIPS, HDPE, C, F" and the outer protective layer (6) In the above-mentioned third embodiment, the inner protective layer (9) produced from the mixture of "HIPS, HDPE, C" not containing filler material is provided between the main layer (7) produced from the mixture of "HIPS, HDPE, C, F" and the insulation volume (5) wherein polyurethane is injected and the chemical resistance of the inner liner (4) is increased particularly against the corrosive effect of polyurethane in the insulation volume (5).

According to the present invention, the inner liner (4) has the outer protective layer (6) produced from the mixture of glossy high impact polystyrene (glossy HIPS) and "HIPS, HDPE, C". The outer protective layer (6) provides the forming of a glossy surface by means of the glossy HIPS contained therein on the side of the compartment (3) which the consumer may contact. Furthermore, the outer protective layer (6) increases the chemical resistance of the inner liner (4) by means of the "HIPS, HDPE, C" mixture thus the problem of cracking in the inner liner (4) is prevented.

The "HIPS, HDPE, C, F" mixture, obtained by adding filler material (F) to the mixture of high impact polystyrene (HIPS), high density polyethylene (HDPE) and compatibilizer material (C) used in manufacturing the inner liner (4) of the refrigerator (1), is quite low in cost besides having high chemical and mechanical resistance.

It is to be understood that the present invention is not limited by the embodiments disclosed above and a person skilled in the art can easily introduce different embodiments within the scope of the protection postulated by the claims of the present invention.

## Claims

1. A refrigerator (1) comprising an outer wall (2), a compartment (3) disposed inside its body and wherein food and beverage items are placed, an inner liner (4) enclosing the compartment (3) and produced by thermoforming of plastic material, and an insulation volume (5) disposed between the inner liner (4) and the outer wall (2) and wherein polyurethane is injected, the inner liner (4) having an outer protective layer (6) on its inner surface facing the compartment (3) which forms a barrier against chemical corroders and a main layer (7) disposed between the outer protective layer (6) and the insulation volume (5); the main layer (7) being produced from the mixture of
- high impact polystyrene (HIPS),
- high density polyethylene (HDPE),
- compatibilizer (C) material providing mixing of the high impact polystyrene (HIPS) and high density polyethylene (HDPE), and
- filler material (F);
and the inner liner (4) having the outer protective layer (6) produced from glossy high impact polystyrene (glossy HIPS) and the "HIPS, HDPE, C" mixture.

2. A refrigerator (1) as in Claim 1, **characterized by** the inner liner (4) having the main layer (7) wherein a material selected from the calcium carbonate, talc, dolomite, wollastonite or the silica group is used as the filler material (F).

3. A refrigerator (1) as in Claim 1 or 2, **characterized by** the inner liner (4) wherein a material selected from the styrene - isoprene - styrene (SIS), styrene - butadiene - styrene (SBS), polyethylene grafted polystyrene (PE - g - PS) or styrene - ethylene - butadiene - styrene (SEBS) groups is used as the compatibilizer material (C).

4. A refrigerator (1) as in any one of the above Claims, **characterized by** the inner liner (4) having the main layer (7) in contact with polyurethane on the side of the insulation volume (5) and an inner layer (8) situated between the main layer (7) and the outer protective layer (6) and produced only from high impact polystyrene (HIPS).

5. A refrigerator (1) as in any one of the Claims 1 to 3, **characterized by** the inner liner (4) having the main layer (7) in contact with polyurethane on the side of the insulation volume (5) and the inner layer (8) situated between the main layer (7) and the outer protective layer (6) and produced from the mixture of "HIPS, HDPE, C".

6. A refrigerator (1) as in any one of the Claims 1 to 3, **characterized by** the inner liner (4) having an inner protective layer (9) in contact with polyurethane on the side of the insulation volume (5), and produced from the mixture of "HIPS, HDPE, C", the main layer (7) being situated between the inner protective layer (9) and the outer protective layer (6).

## Patentansprüche

1. Kühlschrank (1), umfassend eine Außenwand (2), ein Fach (3), das in seinem Gehäusekörper angeordnet ist und in das Lebensmittel und Getränke gelegt werden, eine Innenauskleidung (4), die das Fach (3) umschließt und durch Wärmeformen von Kunststoffmaterial hergestellt ist, und ein Isolationsvolumen (5), das zwischen der Innenauskleidung (4) und der Außenwand (2) angeordnet ist und in das Polyurethan eingespritzt ist, wobei die Innenauskleidung (4) eine äußere Schutzschicht (6) an ihrer Innenfläche, die dem Fach (3) zugewandt ist und eine Barriere gegen chemische Korrosionsstoffe bildet, und eine Hauptschicht (7) aufweist, die zwischen der äußeren Schutzschicht (6) und dem Isolationsvolumen (5) angeordnet ist, wobei die Hauptschicht (7) hergestellt ist aus einem Gemisch aus
- schlagzähes Polystyrol (HIPS),
- Hart-Polyethylen (HDPE),
- Compatibilizer-Material (C), das das Vermischen des schlagzähen Polystyrols (HIPS) und des Hart-Polyethylens (HDPE) ermöglicht, und
- Füllmaterial (F)
- und wobei die äußere Schutzschicht (6) der Innenauskleidung (4) aus stoßzähem Glanzpolystyrol (Glanz-HIPS) und dem Gemisch aus HIPS, HDPE und C hergestellt ist.

2. Kühlschrank (1) nach Anspruch 1, **dadurch gekennzeichnet, dass** bei der Hauptschicht (7) der Innenauskleidung (4) ein Material, das ausgewählt ist aus der Gruppe Kalziumkarbonat, Talk, Dolomit, Wollastonit oder Silica, als das Füllmaterial (F) benutzt wird.

3. Kühlschrank (1) nach Anspruch 1 oder 2, **dadurch gekennzeichnet, dass** bei der Innenauskleidung (4) ein Material, das ausgewählt ist aus den Gruppen Styrol-Isopren-Styrol (SIS), Styrol-Butadien-Styrol (SBS), Polyethylen-gepfropftes Polystyrol (PE-g-PS) oder Styrol-Ethylen-Butadien-Styrol (SEBS) als das Compatibilizer-Material (C) benutzt wird.

4. Kühlschrank (1) nach einem der vorangehenden Ansprüche, **dadurch gekennzeichnet, dass** bei der Innenauskleidung (4) die Hauptschicht (7) mit dem Polyurethan auf der Seite des Isolationsvolumens (5) und einer Innenschicht (8), die zwischen der Außenschicht (7) und der äußeren Schutzschicht (6) angeordnet ist und nur aus schlagzähem Polystyrol (HIPS) hergestellt ist, in Kontakt steht.

5. Kühlschrank (1) nach einem der Ansprüche 1 bis 3, **dadurch gekennzeichnet, dass** bei der Innenauskleidung (4) die Hauptschicht (7) mit dem Polyurethan auf der Seite des Isolationsvolumens (5) und der Innenschicht (8), die zwischen der Außenschicht (7) und der äußeren Schutzschicht (6) angeordnet ist und aus dem Gemisch aus HIPS, HDPE und C hergestellt ist, in Kontakt steht.

6. Kühlschrank (1) nach einem der Ansprüche 1 bis 3, **dadurch gekennzeichnet, dass** bei der Innenauskleidung (4) eine innere Schutzschicht (9) mit dem Polyurethan auf der Seite des Isolationsvolumens (5) in Kontakt steht und aus dem Gemisch aus HIPS, HDPE und C hergestellt ist, wobei die Hauptschicht (7) zwischen der inneren Schutzschicht (9) und der äußeren Schutzschicht (6) angeordnet ist.

## Revendications

1. Un réfrigérateur (1) comprenant une paroi externe (2), un compartiment (3) situé dans son corps et où les aliments et les boissons sont placés, une paroi interne (4) entourant le compartiment (3) et fabriqué par le thermoformage d'un matériau plastique, et un volume d'isolation (5) disposé entre la paroi interne (4) et la paroi externe (2) et où le polyuréthane est injecté, la paroi interne (4) présentant une couche de protection externe (6) sur sa surface interne en face du compartiment (3) qui forme une barrière contre des corrosifs chimiques et une couche principale (7) disposée entre la couche de protection externe (6) et le volume d'isolation (5), la couche principale (7) étant fabriquée d'un mélange de
- polystyrène choc (HIPS),
- polyéthylène haute densité (HDPE),
- agent compatibilisant (C) qui assure le mélange du polystyrène choc (HIPS) et le polyéthylène haute densité (HDPE), et
- matériau de remplissage (F)
- et la paroi interne (4) présentant la couche de protection externe (6) fabriquée d'un polystyrène choc brillant (HIPS brillant) et le mélange « HIPS, HDPE, C ».

2. Un réfrigérateur (1) selon la Revendication 1, **caractérisé par** la paroi interne (4) présentant la couche principale (7) où un matériau choisi parmi les groupes du carbonate de calcium, le talc, la dolomite, la wollastonite ou la silice est utilisé comme le matériau de remplissage (F).

3. Un réfrigérateur (1) selon la Revendication 1 ou 2, **caractérisé par** la paroi interne (4) où un matériau choisi parmi les groupes styrène - isoprène - styrène (SIS), styrène - butadiène - styrène (SBS), polyéthylène greffé polystyrène (PE - g - PS) ou styrène - éthylène - butadiène - styrène (SEBS) est utilisé comme l'agent compatibilisant (C).

4. Un réfrigérateur (1) selon l'une quelconque des revendications précédentes, **caractérisé par** la paroi interne (4) présentant la couche principale (7) en contact avec le polyuréthane sur le côté du volume d'isolation (5) et une couche interne (8) située entre la couche principale (7) et la couche de protection externe (6) et fabriquée seulement du polystyrène choc (HIPS).

5. Un réfrigérateur (1) selon l'une quelconque des revendications de 1 à 3, **caractérisé par** la paroi interne (4) présentant la couche principale (7) en contact avec le polyuréthane sur le côté du volume d'isolation (5) et la couche interne (8) située entre la couche principale (7) et la couche de protection externe (6) et fabriquée du mélange « HIPS, HDPE, C ».

6. Un réfrigérateur (1) selon l'une quelconque des revendications de 1 à 3, **caractérisé par** la paroi interne (4) présentant une couche de protection interne (9) en contact avec le polyuréthane sur le côté du volume d'isolation (5) et fabriquée du mélange « HIPS, HDPE, C », la couche principale (7) étant située entre la couche de protection interne (9) et la couche de protection externe (6).
